# EUROPÄISCHE PATENTSCHRIFT

(11) **EP 1 339 809 B1**
(45) Veröffentlichungstag und Bekanntmachung des Hinweises auf die Patenterteilung: **21.03.2007**
(21) Anmeldenummer: 01999618.0
(22) Anmeldetag: 30.11.2001
(51) Int. Cl.: C09K 3/14, C04B 35/10, B24D 3/00, B24D 11/00

(54) **VERFAHREN ZUR HERSTELLUNG VON KORUNDSCHLEIFKORN AUF TONERDEBASIS MIT ERHÖHTER ZÄHIGKEIT SOWIE SEINE VERWENDUNG IN SCHLEIFMITTELN**
METHOD FOR PRODUCING AN OXIDE OF ALUMINUM BASED CORUNDUM ABRASIVE GRAIN WITH INCREASED TENACITY AND USE THEREOF IN ABRASIVES
PROCEDE DE PRODUCTION D'UN GRAIN ABRASIF DE CORINDON A BASE D'OXYDE D'ALUMINIUM A TENACITE ELEVEE, ET SON UTILISATION DANS DES PRODUITS ABRASIFS

(30) Priorität: 08.12.2000 DE 10061498
(43) Veröffentlichungstag der Anmeldung: 03.09.2003
(73) Patentinhaber: Treibacher Schleifmittel GmbH, 79725 Laufenburg (DE)
(72) Erfinder: SKALE, Franz, A-9523 Villach (AT); KUNZ, Reiner, 79725 Laufenburg (DE)
(74) Vertreter: Patentanwälte Westphal, Mussgnug & Partner
(86) Internationale Anmeldenummer: PCT/EP2001/014027
(87) Internationale Veröffentlichungsnummer: WO 2002/046327

(56) Entgegenhaltungen:
- EP-A- 0 409 991
- GB-A- 1 421 174
- US-A- 4 157 898

## Beschreibung

Die Erfindung betrifft ein Verfahren zur Herstellung von Korundschleifkorn auf Tonerdebasis nach dem Oberbegriff des Anspruchs 1 sowie seine Verwendung in Schleifmitteln auf Unterlage und/oder gebundenen Schleifmitteln.

Schleifkörner auf Basis von Korund sind seit langem bekannt und gehören auch heute noch zu den am häufigsten eingesetzten Materialien zur Bearbeitung von Oberflächen bzw. für Schleifoperationen. Bedingt durch die Vielzahl der zu bearbeitenden unterschiedlichen Werkstoffe, wie Holz, Stahl, Edelstahl, Kunststoffe u.a., wurden in der Vergangenheit verschiedene Korundsorten bzw. Spezialkorunde entwickelt, die sich bei bestimmten Anwendungsfällen besonders bewährt haben.

So zeichnen sich beispielsweise die Normal- und Halbedelkorunde, die über eine reduzierende Schmelze im elektrischen Lichtbogen direkt aus Bauxit erhalten werden und im Fertigprodukt neben Al₂O₃ vor allem noch Anteile an TiO₂ enthalten, durch eine im Vergleich zu den Edelkorunden, die im Lichtbogenofen aus Tonerde geschmolzen werden und fast ausschließlich aus Aluminiumoxid bestehen, erhöhte Zähigkeit aus und werden in gebundenen Schleifmitteln bevorzugt zur Bearbeitung von Metallen, Metall-Legierungen, Guss- und Normalstahl eingesetzt. In Schleifmitteln auf Unterlage bearbeitet man mit diesen Korundsorten ebenfalls Metall und Legierungen, aber auch Holz und Kunststoffe. Durch eine zusätzliche Temperaturbehandlung unter oxidierenden Bedingungen, bei der das Titansuboxid (Ti₂O₃) an der Kornoberfläche oxidiert wird und Titan-Aluminium-Verbindungen mit vierwertigem Titan gebildet werden, kann die Zähigkeit der Titan-haltigen Korunde sogar noch gesteigert werden. Die Herstellung solcher Korunde wird in US-A-4 157 898 beschrieben. Fehlstellen im Ionengitter bewirken eine Blaufärbung der Oberfläche der Titan-haltigen Schleifkörner nach der Temperaturbehandlung. Die Steigerung der Zähigkeit führt man vor allem auf die Anwesenheit von Titan als Legierungsbestandteil zurück.

Noch zähere Korundschleifkörner können beispielsweise durch die Legierung von Al₂O₃ mit ZrO₂ erhalten werden, wobei das Zirkonoxid gemeinsam mit Aluminiumoxid geschmolzen und die flüssige Schmelze dann möglichst rasch abgeschreckt wird, um ein Entmischen der Komponenten beim Abkühlen zu verhindern. Dabei bildet sich ein mikrokristallin aufgebautes Schleifmaterial, in dem ZrO₂ und Al₂O₃ homogen verteilt nebeneinander vorliegen. Die Herstellung von Zirkonkorunden wird beispielsweise in der EP-B-0 595 081 beschrieben.

Ähnlich zähe Materialien, die ebenfalls mikrokristallin aufgebaut sind, können auch über einen chemischen bzw. keramischen Weg erhalten werden, wobei als Ausgangsstoff feinstteilige Tonerde oder ein entsprechender Vorstoff, aus dem während des Herstellungsprozesses Al₂O₃ entsteht, zu einem Grünkörper verarbeitet wird, der dann bei Temperaturen zwischen 1200 und 1600 °C gesintert wird. Sinterkorunde sind beispielsweise in der EP-B-0 152 068 und der EP-A-0 725 045 beschrieben.

Die Edelkorunde, die aus Tonerde geschmolzen werden, sind dagegen spröder und werden aufgrund der damit verbundenen hohen Schnittigkeit vorteilhaft zur Bearbeitung von Holz, Nichtei-senmetallen, Leder, Kunststoffen, Gummi und Lacken verwendet. Neben den reinen Edelkorunden, die zu 99,8 % aus Al₂O₃ bestehen sind auch solche bekannt, die zusätzlich geringe Anteile an Legierungsbestandteilen, wie Cr₂O₃, TiO₂ o.a., aber auch Mischungen daraus aufweisen, wodurch teilweise die Zähigkeit des Edelkorundes schon leicht heraufgesetzt wird. Die Zähigkeitswerte dieser Materialien liegen zwischen denen der reinen Edelkorunde und denen der aus Bauxit geschmolzenen Normal- und Halbedelkorunde. Daneben sind weitere Korundsorten bekannt, deren Zähigkeit ebenfalls in diesem Zwischenbereich liegt. Ein Beispiel dafür sind die sogenannten Einkristallkorunde, die durch gezielte Kristallisation beim Abkühlen aus der Schmelze gewonnen werden und beispielsweise vorteilhaft für den Präzisionsschliff eingesetzt werden können. Bei dem Einkristallkorund handelt es sich im Idealfall um ein blockiges Schleifkorn mit unversehrten Schneidkanten, das in der Schmelze in der entsprechenden Form und Größe gewachsen ist und nach dem Abkühlen der Schmelze ohne aufwendige Zerkleinerungsarbeit aufbereitet werden kann.

Aufgrund der ungeheuren Vielfalt der zu bearbeitenden unterschiedlichen Werkstoffe, Oberflächen und Formen sowie der unterschiedlichen Anforderungen an den Bearbeitungsprozess selber werden nicht nur sämtliche oben angeführten Korundsorten jeweils für bestimmte Schleifoperationen bevorzugt eingesetzt, sondern es besteht darüber hinaus weiterhin Bedarf, Korunde mit bestimmten Eigenschaften, die zwischen denen der oben aufgeführten Sorten liegen oder über die der oben aufgeführten Sorten hinausgehen, für spezielle Schleifoperationen einzusetzen. Teilweise gelingt es diesen Bedarf dadurch abzudecken, dass man dazu übergeht, Mischungen aus den unterschiedlichen Typen einzusetzen, um für bestimmte Schleifoperationen ein ganz spezifisches Schleifverhalten des Schleifmittels zu erreichen.

Allgemein ist also bei der Oberflächenbearbeitung mit Hilfe von Schleifmitteln der Trend zu beobachten, das Schleifmittel dem zu bearbeitenden Werkstoff noch besser anzupassen, um beispielsweise die Abtragsleistung oder die Oberflächengüte weiter zu verbessern. Je nach Typ des zu betrachtenden Schleifmittels stehen dem Schleifmittel-Hersteller verschiedene Möglichkeiten zur Verfügung, eine weitere Optimierung zu erreichen.

So kann man beispielsweise bei der Herstellung der sogenannten Schleifmittel auf Unterlage (Schleifbänder, Schleifpapiere u.a.) neben dem Schleifkorn selbst den Träger für das Schleifkorn (die Unterlage), den Binder, der das Schleifkorn auf der Unterlage festhält, und die sogenannten Schleifhilfsstoffe (chemische Verbindungen, die in den Schleifprozess eingreifen) anpassen und optimieren. Bei der Herstellung von gebundenen Schleifmitteln (Schleifscheiben, Schleifkörper u.a.) hat man ebenfalls die Möglichkeit, Bindung, Schleifhilfsstoffe (schleifaktive Substanzen), Füllstoffe und natürlich das Schleifkorn selber einander anzupassen und für einen bestimmten Schleifprozess zu optimieren.

Auch wenn der richtigen Rezeptur für Bindung, sonstige Rohstoffe und Herstellungsbedingungen eine ganz entscheidende Bedeutung für den erfolgreichen Einsatz als Schleifmittel zukommt, so ist letztendlich doch das passende Schleifkorn selbst, mit dem ja die eigentliche Schleifarbeit (Materialabtrag) durchgeführt wird, das entscheidende Kriterium für einen effizienten und erfolgreichen Einsatz des Schleifmittels.

Aufgabe der Erfindung ist es daher, ein Verfahren zur Herstellung von Korundschleifkorn bereitzustellen, das ein verbessertes Eigenschaftsprofil im Vergleich zu den Schleifkornsorten nach dem Stand der Technik aufweist, wodurch eine noch bessere Anpassung des Schleifmittels für bestimmte Schleifoperationen möglich ist und entsprechend höhere Schleifleistungen erzielt werden können.

Gelöst wird die Aufgabe durch ein Verfahren zur Herstellung von Korundschleifkorn auf Basis von Tonerde mit einem Titanoxidgehalt von weniger als 0.8 Gew.-%, wobei
a) Tonerde durch einen Schmelz- oder Sinterprozess zu einem kompakten Grundkörper für Schleifkörner verarbeitet wird,
b) der Grundkörper für Schleifkörner zerkleinert wird,
c) das so erhaltene Schleifkornband durch Aussieben klasiert wird und
d) die fertige Schleifkörnung oder das klassierte Schleifkornband zur Erhöhung der Zähigkeit einer thermischen Nachbehandlung zwischen 800 und 1500 °C unterzogen wird.

Überraschenderweise wurde gefunden, dass durch eine thermische Nachbehandlung eine Verbesserung der für die Schleifleistung verantwortlichen physikalischen Eigenschaften (wie z.B. Zähigkeit) auch bei Korundsorten, die kein oder nur wenig Titanoxid enthalten, erreicht werden kann und somit ohne großen Aufwand Korundtypen erhalten werden können, deren Eigenschaften sich von den bekannten Korundsorten ausdrücklich unterscheiden und die dadurch für bestimmte Schleifoperationen Vorteile gegenüber den bisher eingesetzten Materialien haben. Diese Verbesserung ist auch bei Korundsorten zu beobachten, die neben Al₂O₃ zusätzliche oxidische Legierungsbestandteile aus der Gruppe Cr₂O₃, MgO, NiO, ZnO, CoO, ZrO₂, TiO₂, SiO₂, und/oder Oxide der Seltenen Erden enthalten.

Die thermische Nachbehandlung erfolgt bei Temperaturen zwischen 800 und 1500 °C, bevorzugt zwischen 900 und 1300 °C. Als Aggregat für die thermische Nachbehandlung eignen sich besonders Drehrohr- oder Pendelöfen; im Prinzip kann jedoch jeder in der Keramik bekannte und geeignete Ofentyp, wie zum Beispiel ein Durchschub- oder auch ein Kammerofen eingesetzt werden. Eine besonders gleichmäßige Behandlung läßt sich vorteilhaft in einem Wirbelschicht-Sinterofen durchführen. Die Behandlungsdauer (Verweilzeit im Ofen) liegt üblicherweise zwischen 15 und 120 Minuten.

Als Ausgangsstoff für die thermische Nachbehandlung wird eine bereits ausgesiebte Körnung oder doch zumindest ein relativ enges Kornband eingesetzt, um eine möglichst homogene und gleichmäßige Nachbehandlung und Behandlungsdauer zu garantieren. Nach der Behandlung empfiehlt es sich eine nochmalige Schutzsiebung durchzuführen, um möglicherweise gebildete Agglomerate abzutrennen oder wieder zu zerstören.

Eine Abhängigkeit der Produktqualität von der Behandlungsdauer und -temperatur konnte festgestellt werden. So konnte bei Temperaturen bis 1500 °C und Verweilzeiten bis 120 Minuten allgemein eine Steigerung der Produktqualität mit steigender Temperatur und zunehmender Dauer der Behandlung festgestellt werden. Allerdings wurde die wesentliche Steigerung der Produktqualität bereits bei Temperaturen zwischen 1000 und 1200 °C erreicht, so dass aus praktischen und ökonomischen Erwägungen die anschließend aufgeführten Beispielen ausschließlich bei Temperaturen von 1200 °C und einer Behandlungsdauer von 30 Minuten durchgeführt wurden.

Zur Beurteilung der Schleifkorneigenschaften wurde die Kornzähigkeit und die Abtragsleistung im Schleiftest herangezogen.

Eine Möglichkeit zur Bestimmung der Verschleißeigenschaften (Zähigkeit) eines Schleifkorns ist der sogenannte Battelle-Test, der 1962 (Vorschrift vom Juni 1962) vom Frankfurter Battelle-Institut E.V. im Auftrag des Verbands Deutscher Schleifmittelwerke e.V. zur Bestimmung der Kornzähigkeit erarbeitet wurde und bei dem eine bestimmte Menge einer eng ausgesiebten Kornfraktion in einer Kugelmühle bestimmter Abmessungen unter genau festgelegten Bedingungen gemahlen wird. Jeweils nach bestimmten Zeiten der Mahlung wird durch eine Prüfsiebung der Anteil des zerstörten Schleifkorns ermittelt. Die Zunahme der zerstörten Kornmenge wird in Abhängigkeit von der Mahldauer graphisch aufgetragen und man ermittelt so diejenige Mahldauer - ausgedrückt als Zahl der Mühlenumdrehungen -, die erforderlich ist, um ein Drittel der Prüfgutmenge zu zerstören. Der dekadische Logarithmus dieser Zahl ist der gesuchte Zähigkeitswert.

Dabei werden zum Aussieben des Prüfkornes und zum Bestimmen des zerstörten Anteils die nach FEPA-Standard vorgeschriebenen Siebe und Siebmaschinen eingesetzt. Als Mahltopf wird ein zylindrischer Stahlbehälter mit den Innenabmessungen in der Länge von 145 ± 2 mm und dem Durchmesser von 145 ± 2 mm eingesetzt, der mit gehärteten Kugellager-Kugeln aus Chromstahl mit einer Rockwell-Härte von ca. 63 gefüllt ist, wobei 8 Kugeln mit einem Nenndurchmesser von 35 mm und mindestens 40 und höchstens 45 Kugeln mit einem Nenndurchmesser von 15 mm eingesetzt werden.

Für die Messung wird das Mahlgefäß mit einer bestimmten Menge (31,5 x spez. Gewicht) Prüfgut befüllt und horizontal auf einem Rollenbock liegend mit einer Drehzahl von 83 ± 1 U/min in Drehung versetzt. Nach einer bestimmten Anzahl von Mühlenumdrehungen (beispielsweise 200, 400, 800 usw.) wird der Anteil an unzerstörter Kornfraktion bestimmt. Die Messungen werden solange wiederholt, bis mehr als ein Drittel der Kornfraktion zerstört ist.

Voraussetzung für einen aussagefähigen Vergleich der so ermittelten Zähigkeitswerte verschiedener Schleifkörner ist, dass das Prüfgut die gleiche Korngröße und eine vergleichbare Schüttdichte besitzt. Die Battelle-Methode ist vor allem für groben Körnungen sehr gut geeignet.

Für die Bestimmung der Kornzähigkeit von feineren Körnungen kann mit dem sogenannten Splittertest ein verwandtes Verfahren herangezogen werden, bei dem es sich um ein internes Verfahren der Anmelderin handelt, das auf dem gleichen Prinzip wie der Battelle-Test basiert und bei dem wiederum eine bestimmte ausgesiebte Kornmenge eingesetzt wird, die aber jetzt nicht in einer Kugelmühle bearbeitet wird, sondern unter vorgegebenen Bedingungen (Druck) mit Hilfe von Pressluft gegen eine Metallplatte geschleudert wird. Anschließend wird wie im Battelle-Test die Menge an unzerstörter Kornfraktion ermittelt. Die Differenz zum Ausgangswert ergibt den Splitterwert in %.

Bei den Untersuchungen zur Zähigkeit wurde festgestellt, dass durchschnittlich eine Steigerung der Zähigkeit, gemessen nach Battelle, von ca. 10 % erreicht wurde, während bei den feineren Körnungen, bedingt durch die unterschiedliche Messmethode, sogar Zähigkeitssteigerungen (Reduzierung des Splitterwertes) bis zu 70 % festgestellt werden konnten. Parallel konnte mit Hilfe von Schleiftests eine Steigerung der Schleifleistung in der Größenordnung von ca. 10 % bis ca. 30 % verzeichnet werden.

Die Abtragsleistungen wurden in verschiedenen Schleifoperationen getestet, die in den folgenden Beispielen näher aufgeführt sind und mit deren Hilfe die vorliegende Erfindung zusätzlich erläutert wird, ohne dass darin eine Einschränkung der Erfindung zu sehen ist.

### Beispiel 1

Die in der Tabelle 1 aufgeführten Korundsorten wurden in der FEPA-Körnung F24 einer thermischen Nachbehandlung bei 1200 °C im Drehrohrofen unterzogen. Die Verweildauer im Ofen betrug 30 Minuten.

**Tabelle 1:Kornzähigkeit verschiedener Korundtypen in der Körnung F24 jeweils vor und nach der thermischen Behandlung**

| Schleifkorn (F24) | | Kornzähigkeit (lgz) | |
|---|---|---|---|
| | Schüttdichte (g/1) | vorher | nachher |
| Mikrokristalliner | | | |
| Sinterkorund | 1686 | 2.64 | 2.87 |
| Edelkorund Weiß | 1721 | 2.46 | 2.74 |
| Edelkorund Rosa | 1730 | 2.53 | 2.78 |
| Edelkorund Dunkelrot | 1750 | 2.57 | 2.83 |
| Einkristallkorund | 1853 | 2.68 | 2.94 |

### Beispiel 2

Die in der Tabelle 2 aufgeführten Korundsorten wurden in der FEPA-Körnung F80 einer thermischen Nachbehandlung bei 1200 °C im Drehrohrofen unterzogen. Die Verweildauer im Ofen betrug 30 Minuten.

**Tabelle 2:Kornzähigkeit verschiedener Korundtypen in der Körnung F80 jeweils vor und nach der thermischen Behandlung**

| Schleifkorn (F80) | Kornzähigkeit(Splitterwert) | | |
|---|---|---|---|
| | Schüttdichte (g/l) | vorher | nachher |
| Mikrokristalliner | | | |
| Sinterkorund | 1756 | 12.1 % | 6.8 % |
| Edelkorund Weiß | 1834 | 14.6 % | 10.4 % |
| Edelkorund Rosa | 1865 | 13.8 % | 11.5 % |
| Edelkorund Dunkelrot | 1828 | 14.1 % | 12.6 % |
| Einkristallkorund | 1930 | 9.7 % | 7.4 % |

### Beispiel 3

Die in der Tabelle 3 aufgeführten Korundsorten wurden in der FEPA-Körnung F120 einer thermischen Nachbehandlung bei 1200 °C im Drehrohrofen unterzogen. Die Verweildauer im Ofen betrug 30 Minuten.

**Tabelle 3: Kornzähigkeit verschiedener Korundtypen in der Körnung F120**

| Schleifkorn (F120) | | Kornzähigkeit | |
|---|---|---|---|
| (Splitterwert) | | | |
| | Schüttdichte (g/l) | vorher | nachher |
| Mikrokristalliner | | | |
| Sinterkorund | 1765 | 13.4 % | 9.2 % |
| Edelkorund Weiß | 1834 | 17.6 % | 14.2 % |
| Edelkorund Rosa | 1856 | 14.3 % | 12.8 % |
| Edelkorund Dunkelrot | 1898 | 15.6 % | 14.1 % |
| Einkristallkorund | 1720 | 12.2 % | 8.7 % |

### Beispiel 4 (Schleiftest I)

Die Korundkörnungen aus Beispiel 1 wurden zu einer keramisch gebundenen Schleifscheibe mit der Spezifikation 230 x 4,5 x 51 (Abmessung) und der Bindung A24K8V40 verarbeitet. Die Scheibe wurde zum Einstechschleifen mit einer Zustellung von 40 µm und einer Vorschubgeschwindigkeit von 19 m/min bei gehärteten Stahl K 110 = DIN 1.2379 = X 155 CrVMn 12 1 (HRc = 65) eingesetzt. In der Tabelle 4 sind die erreichten Abtragsleistungen (G-Faktor = Quotient aus Abtragsmenge und Scheibenverschleiß) aufgezeigt.

| Schleifkorn (F24) | | | G-Faktor |
|---|---|---|---|
| | Schüttdichte (g/l) | vorher | nachher |
| Mikrokristalliner | | | |
| Sinterkorund | 1686 | 17.5 | 18.2 |
| Edelkorund Weiß | 1721 | 10.3 | 12.1 |
| Edelkorund Rosa | 1730 | 10.4 | 12.1 |
| Edelkorund Dunkelrot | 1750 | 11.2 | 12.7 |
| Einkristallkorund | 1853 | 14.3 | 16.9 |

### Tabelle 4: Schleiftest (Einstechschleifen)

### Beispiel 5 (Schleiftest II)

Die Korundkörnungen aus Beispiel 2 wurden zu einer keramisch gebundenen Schleifscheibe mit der Spezifikation 245 x 15 x 51 (Abmessung) und der Bindung A80K8V40 verarbeitet. Die Scheibe wurde zum Flachschleifen mit einer Zustellung von 20 µm und einer Vorschubgeschwindigkeit von 35m/s bei gehärteten Stahl S 600 = DIN 1.3343 = S 6-5-2 eingesetzt. In der Tabelle 5 sind die erreichten Abtragsleistungen (G-Faktor = Quotient aus Abtragsmenge und Scheibenverschleiß) aufgezeigt.

**Tabelle 5: Schleiftest (Flachschleifen)**

| Schleifkorn (F80) | | | G-Faktor |
|---|---|---|---|
| | Schüttdichte (g/1) | vorher | nachher |
| Mikrokristalliner | | | |
| interkorund | 1756 | 29 | 34 |
| Edelkorund Weiß | 1834 | 15 | 18 |
| Edelkorund Rosa | 1865 | 14 | 16 |
| Edelkorund Dunkelrot | 1828 | 16 | 20 |
| Einkristallkorund | 1930 | 22 | 28 |

### Beispiel 6 (Schleiftest III)

Die Korundkörnungen aus Beispiel 3 wurden zu einer keramisch gebundenen Schleifscheibe mit der Spezifikation 245 x 15 x 51 (Abmessung) und der Bindung A120G13V40 verarbeitet. Die Scheibe wurde zum Flachschleifen mit einer Zustellung von 15 µm und einer Vorschubgeschwindigkeit von 19 m/min bei gehärtetem Stahl K 110 = DIN 1.3343 = S 6-5-2 eingesetzt. In der Tabelle 6 sind die erreichten Abtragsleistungen (G-Faktor = Quotient aus Abtragsmenge und Scheibenverschleiß) aufgezeigt.

**Tabelle 6: Schleiftest (Flachschleifen)**

| Schleifkorn (F120) | | | G-Faktor |
|---|---|---|---|
| | Schüttdichte (g/1) | vorher | nachher |
| Mikrokristalliner | | | |
| Sinterkorund | 1765 | 12,3 | 15,7 |
| Edelkorund Weiß | 1834 | 6,2 | 7,4 |
| Edelkorund Rosa | 1856 | 5,8 | 6,5 |
| Edelkorund Dunkelrot | 1898 | 6,0 | 6,7 |
| Einkristallkorund | 1720 | 10,3 | 11,8 |

## Patentansprüche

1. Verfahren zur Herstellung von Korundschleifkorn auf Basis von Tonerde mit einem Anteil an oxidischen Legierungsbestandteilen, bei dem
a) Tonerde durch einen Schmelz- oder Sinterprozess zu einem kompakten Grundkörper für Schleifkörner verarbeitet wird,
b) der Grundkörper für Schleifkörner zerkleinert wird und
c) das so erhaltene Schleifkornband durch Aussieben klassiert wird,
**dadurch gekennzeichnet, dass** die oxidischen Legierungsbestandteile aus der Gruppe Cr₂O₃, MgO, NiO, ZnO, CoO, ZrO₂, TiO₂, SiO₂ und/oder Oxide der Seltenen Erden mit insgesamt maximal 5 Gew.-% sind, wobei der Anteil an TiO₂ alleine maximal 0,8 Gew.-% beträgt, und dass die fertige Schleifkörnung oder das klassierte Schleifkornband zur Erhöhung der Zähigkeit einer thermischen Nachbehandlung zwischen 800 und 1500°C unterzogen wird.

2. Verfahren zur Herstellung von Korundschleifkorn gemäß Anspruch 1,
**dadurch gekennzeichnet, dass** die thermische Nachbehandlung zwischen 900 und 1300 °C durchgeführt wird.

3. Verfahren zur Herstellung von Korundschleifkorn gemäß einem oder mehreren der Ansprüche 1 und 2,
**dadurch gekennzeichnet, dass** die Dauer für die thermische Nachbehandlung zwischen 15 und 120 Minuten, bevorzugt zwischen 20 und 60 Minuten, liegt.

4. Verfahren zur Herstellung von Korundschleifkorn gemäß einem oder mehreren der Ansprüche 1 bis 3,
**dadurch gekennzeichnet, dass** die thermische Nachbehandlung in einem Drehrohr-, Pendel-, Kammer- oder Tunnelofen durchgeführt wird.

5. Verfahren zur Herstellung von Korundschleifkorn gemäß einem oder mehreren der Ansprüche 1 bis 4,
**dadurch gekennzeichnet, dass** die thermische Nachbehandlung in einem Wirbelschlichtsinterofen durchgeführt wird.

6. Verwendung eines Korundschleifkorns, hergestellt nach einem Verfahren gemäß einem oder mehreren der Ansprüche 1 bis 5 in Schleifmitteln auf Unterlage und/oder gebundenen Schleifmitteln.

## Claims

1. Method for the production of corundum abrasive grain of an aluminium oxide basis, with a proportion of oxidic alloying constituents, in which
a) aluminium oxide is processed through a melting or sintering process to become a compact base body for abrasive grains,
b) the base body for abrasive grains is comminuted, and
c) the abrasive grain strip thus obtained is graded,
**characterised in that**
the oxidic alloying constituents are from the group Cr₂O₃, MgO, NiO, ZnO, CoO, ZrO₂, TiO₂, SiO₂ and/or oxides of the rare earths with a maximum per cent by weight of 5%, wherein the proportion of TiO₂ alone is at most 0.8% by weight, and that the finished abrasive graining or the graded abrasive grain strip is subjected to subsequent thermal treatment between 800 and 1500°C, in order to increase toughness.

2. Method for the production of corundum abrasive grain according to claim 1, **characterised in that** the subsequent thermal treatment is carried out at between 900 and 1300°C.

3. Method for the production of corundum abrasive grain according to one or more of the claims 1 and 2, **characterised in that** the duration of the subsequent thermal treatment lies between 15 and 120 minutes, preferably between 20 and 60 minutes.

4. Method for the production of corundum abrasive grain according to one or more of the claims 1 to 3, **characterised in that** the subsequent thermal treatment is carried out in a rotary cylindrical kiln, pendulum kiln, chamber kiln or tunnel kiln.

5. Method for the production of corundum abrasive grain according to one or more of the claims 1 to 4, **characterised in that** the subsequent thermal treatment is carried out in a fluidised bed sintering furnace.

6. Use of a corundum abrasive grain, produced according to a method according to one or more of the claims 1 to 5, in abrasives on a base and/or bonded abrasives.

## Revendications

1. Procédé de production d'un grain abrasif de corindon à base d'alumine comportant une part de composants d'alliage oxydiques, suivant lequel :
a) on transforme de l'alumine au moyen d'un processus de fusion ou de frittage, en un corps de base compact pour grains abrasifs,
b) on broie le corps de base pour grains abrasifs, et
c) le ruban de grain abrasif ainsi obtenu est classé par criblage,
**caractérisé en ce que**
les composants d'alliage oxydiques du groupe constitué par Cr₂O₃, MgO, NiO, ZnO, CoO, ZrO₂, TiO₂, SiO₂ et/ou les oxydes des terres rares, font au total 5 % en poids au maximum, la part du Ti02 à lui seul étant au maximum de 0,8 % en poids, et le granulat abrasif achevé ou le ruban de grain abrasif classé est soumis; en vue d'accroître sa ténacité, à un post-traitement thermique entre 800 et 1 500 °C.

2. Procédé de production d'un grain abrasif de corindon selon la revendication 1,
**caractérisé en ce que**
le post-traitement thermique est effectué entre 900 et 1 300 °C.

3. Procédé de production d'un grain abrasif de corindon selon l'une et/ou l'autre des revendications 1 et 2,
**caractérisé en ce que**
la durée du post-traitement thermique se situe entre 15 et 120 minutes, et de préférence entre 20 et 60 minutes.

4. Procédé de production d'un grain abrasif de corindon selon l'une ou plusieurs des revendications 1 à 3,
**caractérisé en ce que**
le post-traitement thermique est effectué dans un four tubulaire tournant, un four pendulaire, un four à chambre ou un four tunnel.

5. Procédé de production d'un grain abrasif de corindon selon l'une ou plusieurs des revendications 1 à 4,
**caractérisé en ce que**
le post-traitement thermique est effectué dans un four de frittage à couche tourbillonnaire.

6. Utilisation d'un grain abrasif de corindon, produit suivant un procédé selon l'une ou plusieurs des revendications 1 à 5, dans des produits abrasifs sur support et/ou des produits abrasifs liés.
